# EUROPÄISCHE PATENTSCHRIFT

(11) **EP 0 659 908 B1**
(45) Veröffentlichungstag und Bekanntmachung des Hinweises auf die Patenterteilung: **23.04.1997**
(21) Anmeldenummer: 94119897.0
(22) Anmeldetag: 16.12.1994
(51) Int. Cl.: C25F 1/04, C25B 11/04, C25B 11/16, H01M 4/16, H01M 4/68, C25F 5/00

(54) **Verfahren zur Entfernung von Bleidioxid-Resten**
Process for removing residual lead dioxide
Procédé pour l'enlèvement de résidus de dioxyde de plomb

(30) Priorität: 23.12.1993 DE 4344034
(43) Veröffentlichungstag der Anmeldung: 28.06.1995
(73) Patentinhaber: Dyneon GmbH, 84504 Burgkirchen (DE)
(72) Erfinder: Huber, Rudolf, D-84518 Garching (DE); Paul, Norbert, D-84503 Altötting (DE)

(56) Entgegenhaltungen:
- US-A- 2 456 281
- US-A- 4 159 231
- DATABASE WPI Derwent Publications Ltd., London, GB; AN 82-09184E & JP-A-56 166 386 (JAPAN CARLIT KK)
- DATABASE WPI Derwent Publications Ltd., London, GB; AN 90-136545 & JP-A-2 085 386 (JAPAN GORE TEX INC.)

## Beschreibung

Bleidioxid findet in der chemischen Technik vielfach Verwendung als Anodenmaterial, einerseits aufgrund seiner hohen elektrischen Leitfähigkeit und andererseits wegen seines hohen Oxidationspotentials sowie wegen seiner Beständigkeit gegen Korrosion in sauren Elektrolyten.

Es gibt verschiedene Möglichkeiten zur Herstellung von Bleidioxidanoden. Meistens geht man dabei so vor, daß man das Bleidioxid als Schicht auf einen elektrisch leitfähigen Träger, wie beispielsweise Graphit, Titan, Stahl oder legierte Stähle, aufbringt. Die Aufbringung erfolgt durch galvanische Beschichtungsverfahren, indem man auf dem Träger elektrolytisch Bleidioxid aus einem wäßrigen Bad eines Blei(II)-Salzes abscheidet.

Insbesondere für den Schutz des Trägers vor korrosiven Einwirkungen ist es wesentlich, daß die Bleidioxidschichten frei von Rissen und Löchern und möglichst glatt sind sowie eine gewisse Mindestdicke aufweisen. Wenn diese Anforderungen nicht mehr erfüllt sind, ist eine Neubeschichtung erforderlich. Damit diese Neubeschichtung gut haftet und möglichst gleichmäßig ist, ist eine restlose Entfernung des Bleidioxids von der Unterlage erforderlich. Der größte Teil des Bleidioxid-Überzugs wird durch das sogenannte thermische Ablösen entfernt, wobei die Anode erhitzt wird, bis die Schicht zum größten Teil abplatzt. Das erneute Aufbringen einer Bleidioxid-Schicht durch anodische Oxidation erfordert jedoch die Entfernung auch der letzten Reste des Bleidioxids. Diese Entfernung gestaltet sich bisher sehr aufwendig:

Zunächst werden die - festanhaftenden - Bleidioxid-Reste durch Sandstrahlen entfernt. Da hierbei ein bleihaltiger Sand anfällt, kommt dieses Verfahren nur dann in Betracht, wenn eine ordnungsgemäße Entsorgung dieses verunreinigten Sandes gewährleistet ist. In der Praxis bedeutet dies in der Regel den Transport der zu reinigenden Werkstücke zu einem entsprechend ausgestatteten Unternehmen und anschließend den Rücktransport. Zu den damit verbundenen Kosten kommen in jedem Fall die Entsorgungskosten für den bleihaltigen Sand.

Im Anschluß an das Sandstrahlen wird noch eine Reihe von Arbeitsgängen erforderlich, die häufig ein- oder mehrmals wiederholt werden müssen, nämlich Spülen, Beizen, Entfetten, erneutes Spülen und Passivieren der Oberfläche, bevor eine erneute anodische Beschichtung erfolgen kann.

Aus US-A-2 456 281 ist es bekannt, Bleidioxid-Verkrustungen elektrolytisch von Bleianoden zu entfernen, wobei diese Verkrustungen bei Chromplattierungen entstanden sind. Als Elektrolyt dient hierfür eine alkalische Pyrophosphatlösung.

Es wurde nun ein Verfahren zur Entfernung von Bleidioxid-Resten auf leitenden Oberflächen gefunden, das dadurch gekennzeichnet ist, daß das Bleidioxid kathodisch reduziert wird, wobei als Elektrolyt verdünnte Salpetersäure dient. Dieser Vorgang kann in der gleichen Anordnung erfolgen, in der anschließend die anodische Erzeugung des Bleidioxid-Überzugs vorgenommen wird. Es entfallen damit die Transportvorgänge und die vielstufige beschriebene Reinigungsoperation. Die eingesetzte verdünnte Salpetersäure hat zweckmäßig einen Konzentrationsbereich von 2 bis 10 Gew.-%, insbesondere von 4 bis 5 Gew.-%.

Die Behandlungsdauer richtet sich nach der verfügbaren Apparatur und insbesondere nach der Stromdichte und selbstverständlich auch nach der Dimensionierung des zu reinigenden Werkstückes. Vorteilhaft sind Stromdichten von etwa 30 bis 1000 A/m², insbesondere von etwa 50 bis 250 A/m².

Nach der Entfernung der Bleidioxid-Reste genügt üblicherweise ein einfaches Spülen mit entsalztem Wasser, worauf unmittelbar das gereinigte Werkstück als Anode geschaltet wird und die Bleidioxid-Schicht in bekannter Weise durch anodische Oxidation aufgebracht wird.

Das erfindungsgemäße Reinigungsverfahren führt zu einem gleichmäßigen, festhaftenden Bleidioxid-Überzug ohne Risse oder Löcher. Es eignet sich auch hervorragend für große Werkstücke wie chemische Reaktoren, die einen gleichmäßigen und dichten Überzug - auch über Schweißnähte und ähnliche Unebenheiten - erfordern.

In dem folgenden Beispiel wird die Erfindung näher erläutert.

### Beispiel

Aus dem Mittelstück eines chemischen Reaktors, bestehend aus einem 2 m langen Rohr aus Werkstoff 1.454 (Stahllegierung) vom Innendurchmesser 500 mm, ist eine Restbeschichtung von Bleidioxid von weniger als 1 mm Dicke zu entfernen. Dieses Rohr wird in die Elektrolysevorrichtung eingebaut, in der später die Bleidioxid-Schicht durch anodische Oxidation erzeugt wird. Für die erfindungsgemäße Reinigung wird das Rohr jedoch als Kathode geschaltet, mit 5gew.%iger Salpetersäure beschickt und bei einer Stromdichte von 100 A/m² elektrolysiert. Der Elektrolyt wird hierbei relativ zur Rohroberfläche bewegt. Als Anode dient V2A-Stahl. Nach etwa 10 h ist die ursprüngliche Bleidioxid-Schicht restlos entfernt. Der Elektrolyt wird entfernt und das Rohr mit entsalztem Wasser gespült. Es kann hierauf unmittelbar mit der Bleinitrat-Lösung beschickt werden, die als Elektrolyt für die anschließende Erzeugung der neuen Bleidioxid-Schicht dient.

## Patentansprüche

1. Verfahren zur Entfernung von Bleidioxid-Resten auf leitenden Oberflächen, dadurch gekennzeichnet, daß das Bleidioxid kathodisch reduziert wird, wobei als Elektrolyt verdünnte Salpetersäure dient.

2. Verfahren nach Anspruch 1, dadurch gekennzeichnet, daß als Elektrolyt eine 2 bis 10gew.%ige Salpetersäure dient.

3. Verfahren nach Anspruch 1 oder 2, dadurch gekennzeichnet, daß der Träger für die Bleidioxid-Reste eine Stahlfläche ist.

## Claims

1. A process for removing lead dioxide residues on conducting surfaces, which comprises cathodically reducing the lead dioxide, the electrolyte being used is dilute nitric acid.

2. The process as claimed in claim 1, wherein the electrolyte used is nitric acid having a strength of from 2 to 10% by weight.

3. The process as claimed in claim 1 or 2, wherein the support for the lead dioxide residues is a steel surface.

## Revendications

1. Procédé pour enlever les résidus de dioxyde de plomb sur des surfaces conductrices, caractérisé en ce que le dioxyde de plomb est soumis à une réduction cathodique, l'électrolyte étant l'acide nitrique dilué.

2. Procédé selon la revendication 1, caractérisé en ce qu'on utilise comme électrolyte un acide nitrique à 2-10 % en poids.

3. Procédé selon la revendication 1 ou 2, caractérisé en ce que le support des résidus de dioxyde de plomb est une surface d'acier.
